# EUROPEAN PATENT APPLICATION

(11) **EP 3 211 581 A1**
(43) Date of publication of application: **30.08.2017**
(21) Application number: 15852662.4
(22) Date of filing: 08.07.2015
(51) Int. Cl.: G06Q 30/02

(54) **USER-FRIENDLY REWARD PROVIDING METHOD, AND APPARATUS THEREFOR**

(30) Priority: 21.10.2014 KR 20140142730
(71) Applicant: SK Planet Co., Ltd., Seongnam-si, Gyeonggi-do 463-400 (KR)
(72) Inventor: KIM, SeungKyu, Seoul 138-885 (KR); LEE, Minwoo, Seoul 142-872 (KR); KIM, Moonsun, Seoul 152-888 (KR)
(74) Representative: Thorniley, Peter
(86) International application number: PCT/KR2015/007082
(87) International publication number: WO 2016/064068

(57) **Abstract**

Disclosed are a user-friendly reward providing method and an apparatus therefor. The user-friendly reward providing method and apparatus are configured such that moment event information transmitted by a moment software development kit (SDK) applied to an application is received if a moment event occurs during the use of the application by a user, a reward corresponding the moment event information is determined, and the reward comprising an event message, a reward product and a reward message corresponding the reward product is provided to the user whereby it is possible to provide the user with a high level of satisfaction regarding the application.

## Description

### Technical Field

The present invention relates generally to a user-friendly reward-providing method and an apparatus therefor and, more particularly, to a user-friendly reward-providing method and an apparatus therefor, which provide an additional reward based on information related to a user and an event when the event occurs while the user is using an application.

This application claims the benefit of Korean Patent Application No. 10-2014-0142730, filed October 21, 2014, which is hereby incorporated by reference in its entirety into this application.

### Background Art

Generally, since a mobile advertisement service system provides predetermined uniform advertisements stored in a database (DB) to respective users, a problem may arise in that the advertisements are not completely suitable for the situation in which the user uses an application. Further, even if advertisements suitable for the situation in which the user uses an application are provided, a problem may arise in that no reward is provided to the user, thus making it impossible to contribute to improving the satisfaction of the user.

Therefore, there is urgently required new reward-providing technology that provides higher satisfaction in use of an application to a user by providing an additional reward based on information related to the user and an event when the event occurs while the user is using the corresponding application.

As preceding technology related to this, there is Korean Patent Application Publication No. 10-2012-0076447 (Date of Publication: July 9, 2012, entitled "Apparatus and Method for Mobile Intelligent Advertising Based on Mobile User Contextual Matching").

### Disclosure

### Technical Problem

An object of the present invention is to provide higher satisfaction in use of an application to a user by providing an additional reward to the user based on information related to the user and an event when the event occurs while the user is using the corresponding application.

Another object of the present invention is to provide a higher advertising effect for a reward product by providing a pair of the reward product and a reward message when an event occurs while a user is using an application.

### Technical Solution

A user-friendly reward-providing apparatus according to the present invention to accomplish the above objects includes a moment event information reception unit for, when a moment event occurs while a user is using an application, receiving moment event information transmitted from a moment Software Development Kit (SDK) applied to the application; a reward determination unit for determining a reward corresponding to the moment event information; and a reward provision unit for providing the user with the reward that includes an event message, a reward product, and a reward message corresponding to the reward product.

The reward determination unit may include an event message determination unit for determining an event message in consideration of one or more of a moment identifier and an event occurrence time, which are included in the moment event information; a reward product determination unit for determining a reward product in consideration of one or more of an application category, moment emotion information, an application tag, a user gender, and a user age, which are included in the moment event information; and a reward message determination unit for determining a reward message in consideration of one or more of the event occurrence time and the moment emotion information.

The user-friendly reward-providing apparatus may further include an information registration unit for acquiring moment information from an application developer and reward information from a reward provider and registering the acquired moment information and reward information.

The moment information may include one or more of the application category, the moment emotion information indicating an emotion when the moment event occurs, the application tag, the event message, and an event message targeted time, which is a time during which the event message is displayed.

The reward information may include one or more of a targeted gender and age, which is information about a target to which the reward product is provided, the reward message, a reward message targeted time, which is a time during which the reward message is displayed, and targeted emotion information, which is information about a moment emotion when the reward message is displayed.

The event message determination unit may be configured to determine any one of event messages for which the event message targeted time is set and which correspond to the moment identifier and the event occurrence time, among multiple event messages included in the moment information, to be an actual event message, and if there is no event message corresponding to the event occurrence time, randomly determine any one of event messages for which the event message targeted time is not limited and which correspond to the moment identifier to be an actual event message.

The reward product determination unit may be configured to select one or more reward products corresponding to the application category, the moment emotion information, and the application tag from among multiple reward products included in the reward information, as a reward product candidate group, allow only reward products corresponding to one or more of the user gender and age, among reward products in the reward product candidate group, to remain by filtering the reward products in the reward product candidate group, if there is no reward product corresponding to one or more of the user gender and age, among the reward products in the reward product candidate group, allow only reward products for which the targeted gender and age are not limited, among the reward products in the reward product candidate group, to remain by filtering the reward products in the reward product candidate group, and randomly determine any one of the reward products remaining in the reward product candidate group to be an actual reward product.

The reward message determination unit may be configured to determine any one of reward messages for which the reward message targeted time is set and which correspond to the event occurrence time and the moment emotion information, among multiple reward messages included in the reward information, to be an actual reward message, and if there is no reward message corresponding to the event occurrence time, randomly determine any one of reward messages for which the reward message targeted time is not limited and which correspond to the moment emotion information, among the reward messages, to be an actual reward message.

The reward provision unit may be configured to display the event message and a reward product button as a first screen to the user, and when the user clicks the reward product button, change the event message to the reward message as a second screen, display the reward product at a location of the reward product button, and display a 'get gift' button.

Further, a user-friendly reward-providing method according to the present invention includes when a moment event occurs while a user is using an application, receiving moment event information transmitted from a moment Software Development Kit (SDK) applied to the application; determining a reward corresponding to the moment event information; and providing the user with the reward that includes an event message, a reward product, and a reward message corresponding to the reward product.

Determining the reward may include determining an event message in consideration of one or more of a moment identifier and an event occurrence time, which are included in the moment event information; determining a reward product in consideration of one or more of an application category, moment emotion information, an application tag, a user gender, and a user age, which are included in the moment event information; and determining a reward message in consideration of one or more of the event occurrence time and the moment emotion information.

The user-friendly reward-providing method may further include an information registration unit for acquiring moment information from an application developer and reward information from a reward provider and registering the acquired moment information and reward information.

The moment information may include one or more of the application category, the moment emotion information indicating an emotion when the moment event occurs, the application tag, the event message, and an event message targeted time, which is a time during which the event message is displayed.

The reward information may include one or more of a targeted gender and age, which is information about a target to which the reward product is provided, the reward message, a reward message targeted time, which is a time during which the reward message is displayed, and targeted emotion information, which is information about a moment emotion, when the reward message is displayed.

Determining the event message may be configured to determine any one of event messages for which the event message targeted time is set and which correspond to the moment identifier and the event occurrence time, among multiple event messages included in the moment information, to be an actual event message, and if there is no event message corresponding to the event occurrence time, randomly determine any one of event messages for which the event message targeted time is not limited and which correspond to the moment identifier, to be an actual event message.

Determining the reward product may be configured to select one or more reward products corresponding to the application category, the moment emotion information, and the application tag from among multiple reward products included in the reward information as a reward product candidate group, allow only reward products corresponding to one or more of the user gender and age, among reward products in the reward product candidate group, to remain by filtering the reward products in the reward product candidate group, if there is no reward product corresponding to one or more of the user gender and age, among the reward products in the reward product candidate group, allow only reward products for which the targeted gender and age are not limited, among the reward products in the reward product candidate group, to remain by filtering the reward products in the reward product candidate group, and randomly determine any one of the reward products remaining in the reward product candidate group to be an actual reward product.

Determining the reward message may be configured to determine any one of reward messages for which the reward message targeted time is set and which correspond to the event occurrence time and the moment emotion information, among multiple reward messages included in the reward information, to be an actual reward message, and if there is no reward message corresponding to the event occurrence time, randomly determine any one of reward messages for which the reward message targeted time is not limited and which correspond to the moment emotion information, among the reward messages, to be an actual reward message.

Providing the reward may be configured to display the event message and a reward product button as a first screen to the user, and when the user clicks the reward product button, change the event message to the reward message as a second screen, display the reward product at a location of the reward product button, and display a 'get gift' button.

### Advantageous Effects

In accordance with the present invention, higher satisfaction in use of an application may be provided to a user by providing an additional reward to the user based on information related to the user and an event when the event occurs while the user is using the corresponding application.

Further, the present invention may provide a higher advertising effect for a reward product by providing a pair of the reward product and a reward message when an event occurs while a user is using an application.

### Description of Drawings

FIG. 1 is a diagram showing a user-friendly reward-providing system according to an embodiment of the present invention;
FIG. 2 is a block diagram showing an embodiment of the user-friendly reward-providing apparatus shown in FIG. 1;
FIG. 3 is a block diagram showing an example of the reward determination unit shown in FIG. 2;
FIG. 4 is a diagram showing an example of moment event information according to the present invention;
FIG. 5 is a diagram showing an example of moment information according to the present invention;
FIG. 6 is a diagram showing an example of reward information according to the present invention;
FIG. 7 is a diagram showing an example of event message determination according to the present invention;
FIG. 8 is a diagram showing an example of reward product determination according to the present invention;
FIG. 9 is a diagram showing an example of reward message determination according to the present invention;
FIG. 10 is an operation flowchart showing a user-friendly reward-providing method according to an embodiment of the present invention; and
FIG. 11 is a diagram showing an example of an interface screen according to an embodiment of the present invention.

### Best Mode

Embodiments of the present invention will be described in detail with reference to the attached drawings. However, in the following description and drawings, detailed descriptions of known functions or configurations which are deemed to make the gist of the present invention obscure will be omitted. Further, it should be noted that the same reference numerals are used to designate the same or similar elements throughout the drawings.

Prior to the following detailed description of the present invention, it should be noted that the terms and words used in the specification and the claims should not be construed as being limited to ordinary meanings or dictionary definitions, and an inventor can appropriately define the concepts of terms in order to best describe his or her invention. Meanwhile, the embodiments described in the present specification and the configurations illustrated in the drawings are merely preferable embodiments and do not exhaustively present the technical spirit of the present invention. Accordingly, it should be appreciated that there may be various equivalents and modifications that can replace the embodiments and the configurations at the time at which the present application is filed. Further, terms such as "first" or "second" may be used to describe various components, and are merely used to distinguish one component from other components, but are not intended to limit the components.

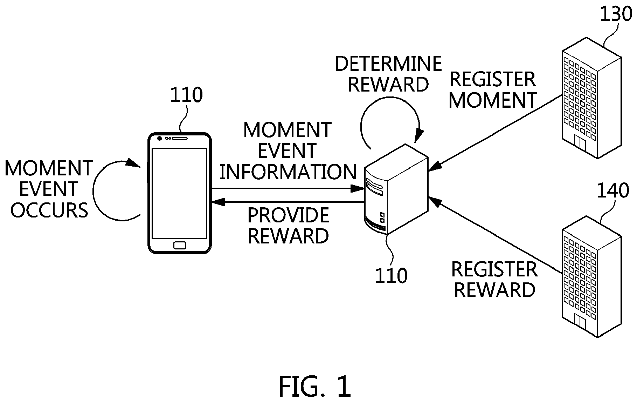

FIG. 1 is a diagram showing a user-friendly reward-providing system according to an embodiment of the present invention.

Referring to FIG. 1, the user-friendly reward-providing system according to the embodiment of the present invention includes a user terminal device 110, a user-friendly reward-providing apparatus 120, an application developer 130, and a reward provider 140.

The user terminal device 110 executes an application to which a moment Software Development Kit (SDK) is applied.

When a moment event based on the moment SDK occurs while the user is using the application, the user terminal device 110 transmits information about the moment event based on the moment SDK to the user-friendly reward-providing apparatus 120.

The term "moment event" means an event for providing a user-friendly reward according to the present invention so that the user-friendly reward is distinguished from an event occurring on a normal application.

Further, the term "moment SDK" means a software development kit which is applied to a normal application so as to provide a user-friendly reward.

Here, the moment event information may include one or more of an application identifier, a moment identifier, and a user identifier.

The moment event information may include an application category and an application tag which correspond to the application identifier, and may also include a user gender and a user age which correspond to the user identifier.

Also, the moment event information may include the time at which a moment event occurs.

The user identifier may be any one of pieces of information, such as a Mobile Directory Number (MDN) and a Mobile Identification Number (MIN), by which the user terminal device 110 may be uniquely identified.

Here, the user terminal device 110 may be a communication device such as a Personal Computer (PC), a notebook computer, a mobile phone, a tablet PC, or a smart phone.

The user-friendly reward-providing apparatus 120 receives moment event information from the moment SDK of the user terminal device 110, determines the reward to be provided to the user using the moment event information, and provides the determined reward to the user by transmitting the reward to the user terminal device 110.

Here, the term "reward" means compensation for the use of the corresponding application by the user.

For example, such a reward may be provided in the form of a Gifticon (gift coupon) or a voucher as compensation to be exchanged for an actual object in an offline store, or may be provided as compensation similar to cash in the form of mileage or points.

In this case, information required to determine a reward is registered in advance in the user-friendly reward-providing apparatus 120, wherein moment information may be acquired from the application developer 130 and reward information may be acquired from the reward provider 140, and the acquired information may be registered in advance.

The application developer 130 applies the moment SDK to the application, and registers the moment information in the user-friendly reward-providing apparatus 120.

Here, the application developer 130 may register the unique event of the application as a moment event, thus enabling a reward to be provided to the user through the user-friendly reward-providing apparatus 120 when the corresponding unique event occurs.

The reward provider 140 registers the reward information in the user-friendly reward-providing apparatus 120 and provides a reward product thereto.

Here, the reward provider 140 may provide the product of its own company as a reward so as to promote the product.

In this case, the reward provider 140 may designate a targeted gender, a targeted age, etc. in the reward information, and may then target the predicted customers for the product of its own company.

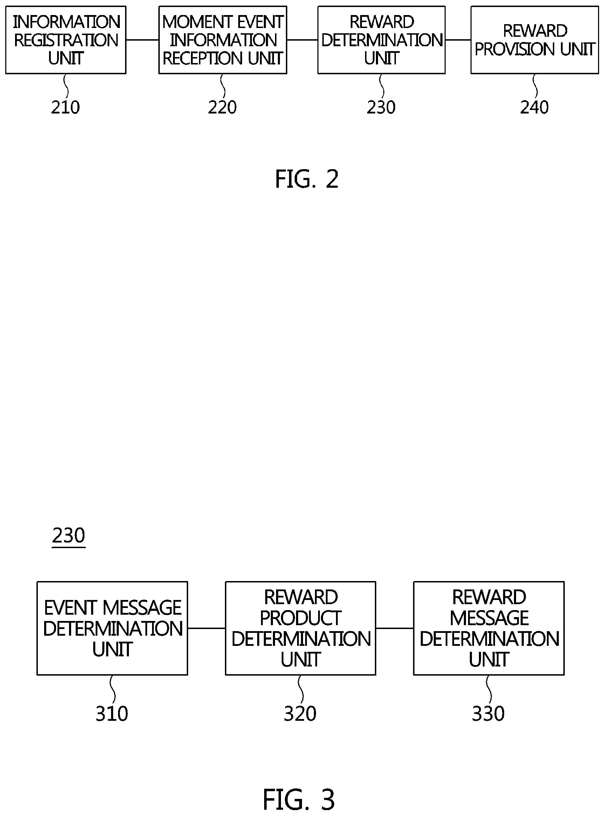

FIG. 2 is a block diagram showing an embodiment of the user-friendly reward-providing apparatus 120 shown in FIG. 1.

Referring to FIG. 2, the user-friendly reward-providing apparatus 120 shown in FIG. 1 includes an information registration unit 210, a moment event information reception unit 220, a reward determination unit 230, and a reward provision unit 240.

The information registration unit 210 acquires moment information from an application developer, acquires reward information from a reward provider, and registers the acquired moment information and reward information.

The moment information may include one or more of an application category, moment emotion information indicating an emotion when a moment event occurs, an application tag, an event message, and an event message targeted time which is the time during which the event message is displayed.

Here, the moment emotion information may be separately registered for each moment event.

At least one event message may be registered for each moment event.

The event message targeted time may be separately registered for each event message.

Here, the event message targeted time may be designated as a specific time so as to limit the time during which the corresponding event message is displayed, or may not be limitedly designated so that the corresponding event message is always displayed.

In this case, the reward information may include one or more of a targeted gender and age, which is information about the target to which a reward product is provided, a reward message, a reward message targeted time which is the time during which the reward message is displayed, and targeted emotion information, which is information about a moment emotion when the reward message is displayed.

The targeted gender may be designated as a male or a female so that the corresponding reward is provided only to a male person or a female person, or may not be limited such that the corresponding reward is provided both to male and female persons.

The targeted age may be designated as a specific age group to which the corresponding reward is to be provided, or may not be limited such that the corresponding reward may be provided to all age groups.

Here, at least one reward message may be registered for each reward product.

The reward message targeted time may be separately registered for each reward message.

In this case, the reward message targeted time may be designated as a specific time so as to limit the time during which the corresponding reward message is displayed, or may not be limited such that the corresponding reward message is always displayed.

When a moment event occurs while the user is using an application, the moment event information reception unit 220 receives moment event information, which is transmitted from the moment SDK applied to the application.

The reward determination unit 230 determines the reward corresponding to the moment event information.

The reward determination unit 230 may determine the reward corresponding to the moment event information using the registered moment information and reward information.

The reward provision unit 240 provides a reward including an event message, a reward product, and a reward message corresponding to the reward product to the user.

Here, the reward provision unit 240 may display the event message and a reward product button as a first screen to the user, change the event message to the reward message, as a second screen, when the user clicks the reward product button, display the reward product at the location of the reward product button, and also display a 'get gift' button.

FIG. 3 is a block diagram showing an example of the reward determination unit 230 shown in FIG 2.

Referring to FIG 3, the reward determination unit 230 shown in FIG. 2 includes an event message determination unit 310, a reward product determination unit 320, and a reward message determination unit 330.

The event message determination unit 310 determines an event message in consideration of one or more of a moment identifier and an event occurrence time included in moment event information.

Here, the event message determination unit 310 may determine any one of event messages for which an event message targeted time is set and which correspond to the moment identifier and the event occurrence time, among multiple event messages included in moment information, to be an actual event message.

If there is no event message corresponding to the event occurrence time, the event message determination unit 310 may randomly determine any one of event messages for which an event message targeted time is not limited and which correspond to the moment identifier, among the multiple event messages, to be the actual event message.

The reward product determination unit 320 determines a reward product in consideration of one or more of an application category, moment emotion information, an application tag, a user gender, and a user age, which are included in the moment event information.

In this case, the reward product determination unit 320 may select one or more reward products which correspond to the application category, the moment emotion information, and the application tag, from among multiple reward products included in reward information, as a reward product candidate group.

The reward product determination unit 320 may allow only reward products that correspond to one or more of the user gender and the user age, among the reward products in the reward product candidate group, to remain by filtering the reward products in the reward product candidate group.

At this time, if there is no reward product that corresponds to one or more of the user gender and the user age, among the reward products in the reward product candidate group, the reward product determination unit 320 may allow only reward products for which the targeted gender and age are not limited, among the reward products in the reward product candidate group, to remain by filtering the reward products.

In this case, the reward product determination unit 320 may randomly determine any one of the reward products remaining in the reward product candidate group to be an actual reward product.

The reward message determination unit 330 determines a reward message in consideration of one or more of the event occurrence time and the moment emotion information.

In this regard, the reward message determination unit 330 may determine any one of reward messages for which a reward message targeted time is set and which correspond to the event occurrence time and the moment emotion information, among multiple reward messages included in the reward information, to be an actual reward message.

If there is no reward message corresponding to the event occurrence time, the reward message determination unit 330 may randomly determine any one of reward messages for which a reward message targeted time is not limited and which correspond to the moment emotion information, among the reward messages, to be the actual reward message.

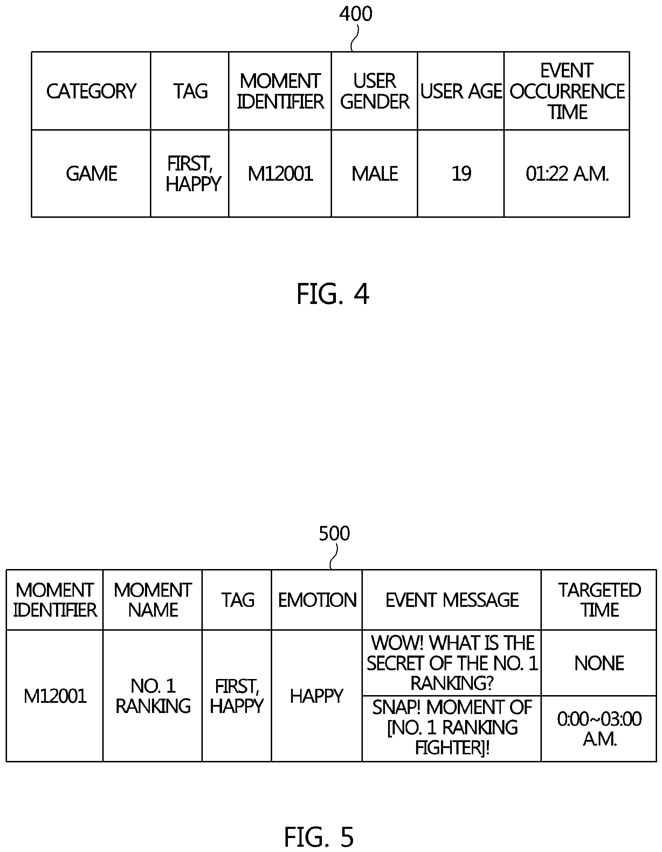

FIG. 4 is a diagram showing an example of moment event information 400 according to the present invention.

Referring to FIG. 4, the moment event information 400 according to the present invention includes an application category, an application tag, a moment identifier, a user gender, a user age, and a moment event occurrence time.

For example, in the moment event information 400 of FIG. 4, the application category is 'Game', the application tag is 'First, Happy', the moment identifier is 'M12001', the user gender is 'male', the user age is '19', and the event occurrence time is '01:22 A.M.'.

FIG. 5 is a diagram showing an example of moment information 500 according to the present invention.

Referring to FIG. 5, the moment information 500 according to the present invention may include a moment identifier, a moment name, a moment tag, moment emotion information, an event message, and an event message targeted time.

For example, in the moment information 500 of FIG. 5, the moment identifier is 'M12001', the moment name is 'the No. 1 ranking', the moment tag is 'First, Happy', and the moment emotion information is 'Happy'.

Here, each moment may include at least one event message.

For example, in the moment information 500 of FIG. 5, moment 'M12001' includes two event messages, and a separate targeted time is set for each event message.

Here, for the targeted time, a separate limit may not be present, as in the case of 'None'.

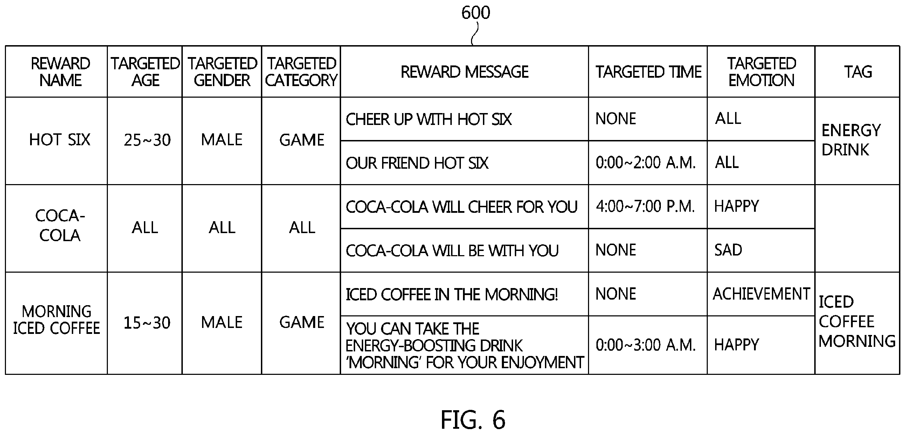

FIG. 6 is a diagram showing an example of reward information 600 according to the present invention.

Referring to FIG. 6, the reward information 600 according to the present invention includes a reward name, a targeted age, a targeted gender, a targeted category, a reward message, a targeted time, targeted emotion information, and a reward tag.

Here, each reward may include at least one reward message.

For example, in the reward information 600 of FIG. 6, each reward includes two reward messages, and a separate targeted time and targeted emotion information are set for each reward message.

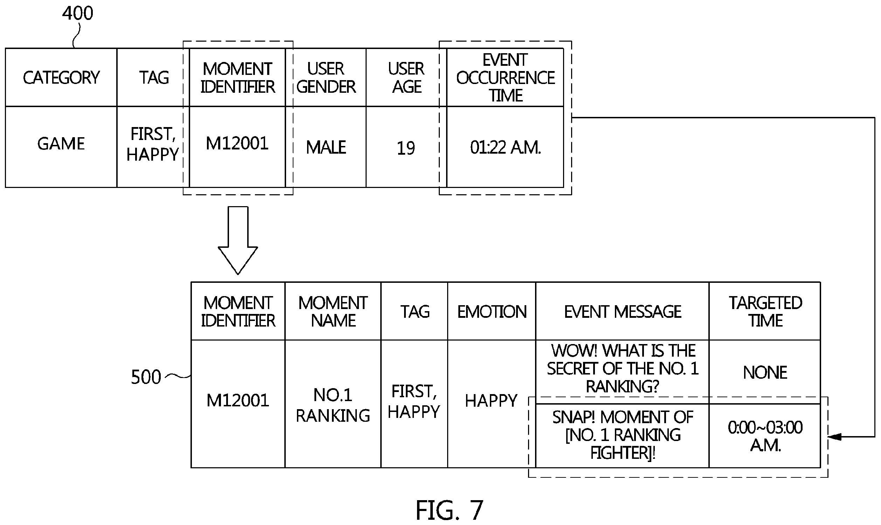

FIG. 7 is a diagram showing an example of event message determination according to an embodiment of the present invention.

Referring to FIG 7, an event message according to the present invention is determined in consideration of moment event information 400 and moment information 500.

When a moment event occurs while a user is using an application, moment event information 400 corresponding to the moment event is generated, and an event message corresponding to an event occurrence time is determined from moment information 500 corresponding to the moment identifier of the moment event information 400.

For example, when the moment identifier of the moment event information 400 is 'M12001', a second event message 'Snap! The moment of [No. 1 ranking fighter]!' corresponding to '01:22 A.M.', which is the event occurrence time, is determined from the moment information 500 corresponding to the moment identifier.

Although not shown in FIG. 7, when the event occurrence time of the moment information 500 is '04:22 A.M.', there is no event message for which the targeted time is set to this time, and thus a first event message 'Wow! What is the secret of the No. 1 ranking?' for which the targeted time is not limited may be determined.

Although not shown in FIG 7, when the number of event messages for which the event occurrence time of the moment information 500 is set as the targeted time is two or more, any one of the event messages may be randomly determined to be an actual event message.

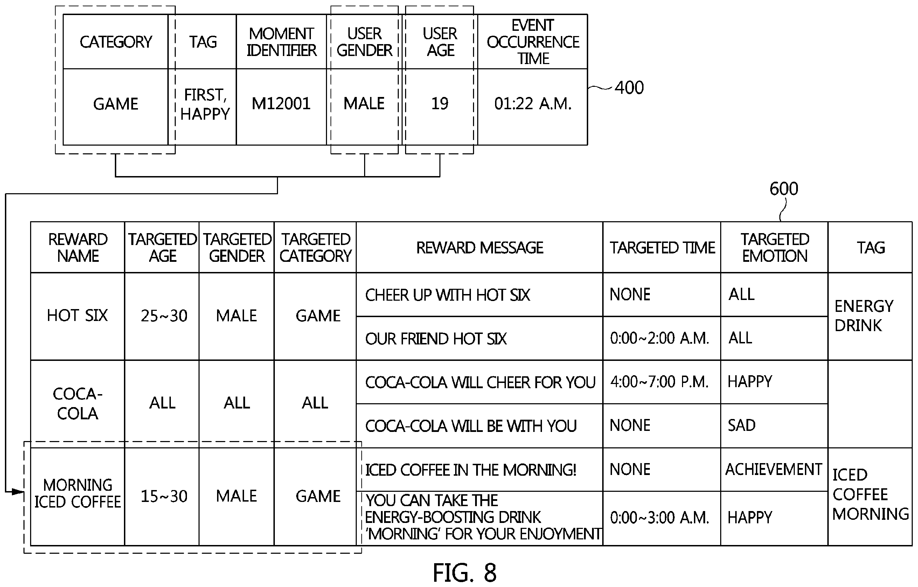

FIG. 8 is a diagram showing an example of reward product determination according to the present invention.

Referring to FIG. 8, a reward product according to the present invention is determined in consideration of moment event information 400 and reward information 600.

When a moment event occurs while a user is using an application, moment event information 400 corresponding to the moment event is generated, and a reward product corresponding to the application category, user gender, and user age of the moment event information 400 is determined.

For example, when the application category of the moment event information 400 is 'Game', and the user gender and the user age are 'male' and '19', respectively, a third reward product 'Morning Iced coffee', for which 'Game', 'male', and '19' are set as a targeted category, a targeted gender, and a targeted age, respectively, is determined.

Although not shown in FIG. 8, when the number of reward products for which the application category, user gender, and user age of the moment event information 400 are set as the targeted category, targeted gender, and targeted age, respectively, is two or more, any one of the reward products may be randomly determined.

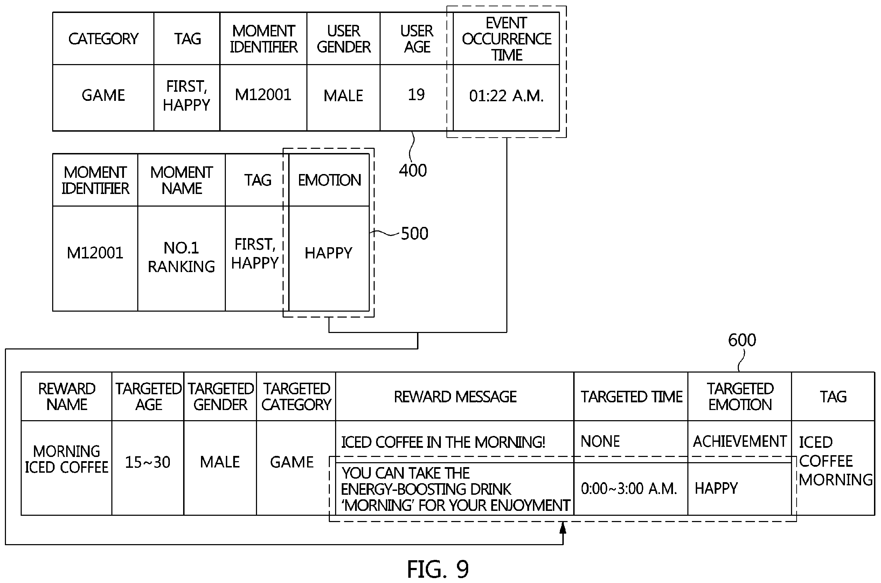

FIG. 9 is a diagram showing an example of reward message determination according to the present invention.

Referring to FIG. 9, a reward message according to the present invention is determined in consideration of moment event information 400, moment information 500, and reward information 600.

When a moment event occurs while a user is using an application, moment event information 400 corresponding to the moment event is generated, and a reward product which corresponds to the application category, user gender, and user age of the moment event information 400 is determined.

Here, the reward product includes one or more reward messages. Among the reward messages, a reward message for which the event occurrence time of the moment event information 400 is set as a targeted time and for which the moment emotion information of the moment information 500 is set as targeted emotion information is determined.

Although not shown in FIG. 9, the number of reward messages for which the event occurrence time of the moment event information 400 and the moment emotion information of the moment information 500 are set as the targeted time and the targeted emotion information, respectively, is two or more, any one of the reward messages may be randomly determined.

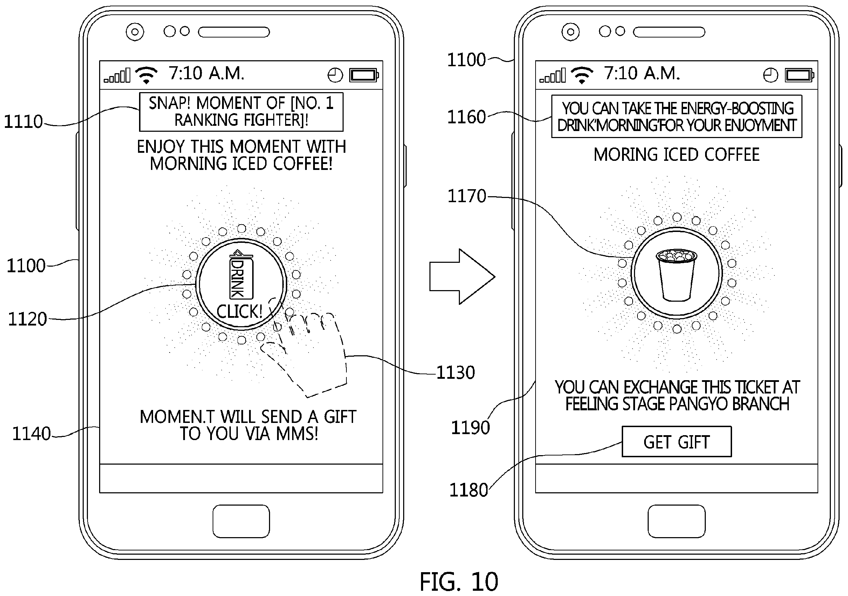

FIG. 10 is an operation flowchart showing a user-friendly reward-providing method according to an embodiment of the present invention.

Referring to FIG. 10, in the user-friendly reward-providing method according to the embodiment of the present invention, the user-friendly reward-providing apparatus acquires moment information from an application developer and reward information from a reward provider, and registers the acquired information at step S1010.

The moment information may include one or more of an application category, moment emotion information indicating an emotion when a moment event occurs, an application tag, an event message, and an event message targeted time, which is the time during which the event message is displayed.

The reward information may include one or more of a targeted gender and age, which is information about a target to which a reward product is provided, a reward message, a reward message targeted time, which is the time during which the reward message is displayed, and targeted emotion information, which is information about a moment emotion when the reward message is displayed.

Further, in the user-friendly reward-providing method according to the embodiment of the present invention, when a moment event occurs while the user is using an application, moment event information transmitted from a moment Software Development Kit (SDK) applied to the application is received at step S1020.

Further, the user-friendly reward-providing method according to the embodiment of the present invention determines a reward corresponding to the moment event information at step S1030.

In this case, step S1030 may include the step of determining an event message in consideration of one or more of a moment identifier and an event occurrence time included in the moment event information; the step of determining a reward product in consideration of one or more of an application category, moment emotion information, an application tag, a user gender, and a user age, which are included in the moment event information; and the step of determining a reward message in consideration of one or more of the event occurrence time and the moment emotion information.

Here, the step of determining the event message may be configured to determine any one of event messages for which the event message targeted time is set and which correspond to the moment identifier and the event occurrence time, among multiple event messages included in the moment information, to be the actual event message, and may be configured to, if there is no event message corresponding to the event occurrence time, randomly determine any one of the event messages for which the event message targeted time is not limited and which correspond to the moment identifier to be the actual event message.

Further, the step of determining the reward product may be configured to select one or more of reward products which correspond to the application category, the moment emotion information, and the application tag, from among multiple reward products included in the reward information, as a reward product candidate group, allow only reward products that correspond to one or more of the user gender and user age, among the reward products in the reward product candidate group, to remain by filtering the reward products, and if there is no reward product that corresponds to one or more of the user gender and user age, among the reward products in the reward product candidate group, allow only reward products for which a targeted gender and a targeted age are not limited, among the reward products in the reward product candidate group, to remain by filtering the reward products, and randomly determine any one of the reward products remaining in the reward product candidate group to be an actual reward product.

Here, the step of determining the reward message may be configured to determine any one of reward messages for which the reward message targeted time is set and which correspond to the event occurrence time and the moment emotion information, among the multiple reward messages included in the reward information, to be an actual reward message, and may be configured to, if there is no reward message that corresponds to the event occurrence time, randomly determine any one of reward messages for which the reward message targeted time is not limited and which correspond to the moment emotion information, among the reward messages, to be the actual reward message.

Then, the user-friendly reward-providing method according to the embodiment of the present invention provides the user with a reward that includes the event message, the reward product, and the reward message corresponding to the reward product at step S1040.

Here, at step S1040, the event message and a reward product button are displayed as a first screen to the user. When the user clicks the reward product button, the event message may be changed to the reward message, as a second screen, the reward product may be displayed at the location of the reward product button, and a 'get gift' button may also be displayed.

The user-friendly reward-providing method according to the present invention may be implemented or a smartphone Application (app) that can be executed by various computer means. In this case, the program or smartphone app may be recorded on a computer-readable storage medium. The computer-readable storage medium may include program instructions, data files, and data structures solely or in combination. Program instructions recorded on the storage medium may have been specially designed and configured for the present invention, or may be known to or available to those who have ordinary knowledge in the field of computer software. Examples of the computer-readable storage medium include all types of hardware devices specially configured to record and execute program instructions, such as magnetic media, such as a hard disk, a floppy disk, and magnetic tape, optical media, such as compact disk (CD)-read only memory (ROM) and a digital versatile disk (DVD), magneto-optical media, such as a floptical disk, ROM, random access memory (RAM), and flash memory. Examples of the program instructions include machine language code, such as code created by a compiler, and high-level language code executable by a computer using an interpreter. The hardware devices may be configured to operate as one or more software modules in order to perform the operation of the present invention, and vice versa.

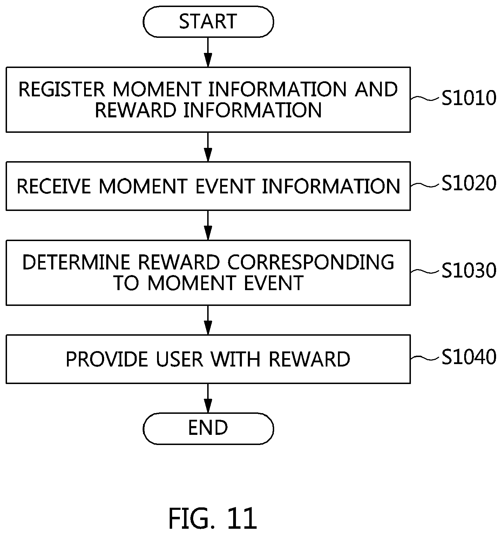

FIG. 11 illustrates an example of a screen on which a user-friendly reward-providing interface is displayed.

Referring to FIG. 11, the screen on which the user-friendly reward-providing interface according to the present invention is displayed may be displayed on a user terminal device 1100, and may be separately displayed as a screen 1140 before input and as a screen 1190 after input, depending on the input 1130 of the user.

In the case of the screen 1140 before input, a popup window for providing a reward is displayed when a moment event occurs while the user is using an application, and an event message 1110 and a reward product button 1120 are displayed in the popup window. When the user clicks the reward product button 1120, the current screen switches to the screen 1190 after input.

In the case of the screen 1190 after input, the event message 1110 is changed to a reward message 1160, a reward product 1170 is displayed at the location of the reward product button 1120, a 'get gift' button 1180 is displayed below the reward product 1170, and a reward is stored in the user terminal device when the user clicks the 'get gift' button 1180.

As described above, in the user-friendly reward-providing method and the apparatus therefor according to the present invention, the configurations and schemes in the above-described embodiments are not limitedly applied, and some or all of the above embodiments can be selectively combined and configured so that various modifications are possible.

### Industrial Applicability

According to the present invention, when an event occurs while a user is using an application, an additional reward is provided to the user based on information related to the user and the event, and thus higher satisfaction in use of the corresponding application may be provided to the user, and an advertising effect may be provided to a reward provider, with the result that contribution to the development of industries may be improved from the standpoint of contribution to application popularization.

## Claims

1. A user-friendly reward-providing apparatus, comprising:
a moment event information reception unit for, when a moment event occurs while a user is using an application, receiving moment event information transmitted from a moment Software Development Kit (SDK) applied to the application;
a reward determination unit for determining a reward corresponding to the moment event information; and
a reward provision unit for providing the user with the reward that includes an event message, a reward product, and a reward message corresponding to the reward product.

2. The user-friendly reward-providing apparatus of claim 1, wherein the reward determination unit comprises:
an event message determination unit for determining an event message in consideration of one or more of a moment identifier and an event occurrence time, which are included in the moment event information;
a reward product determination unit for determining a reward product in consideration of one or more of an application category, moment emotion information, an application tag, a user gender, and a user age, which are included in the moment event information; and
a reward message determination unit for determining a reward message in consideration of one or more of the event occurrence time and the moment emotion information.

3. The user-friendly reward-providing apparatus of claim 2, further comprising an information registration unit for acquiring moment information from an application developer and reward information from a reward provider and registering the acquired moment information and reward information.

4. The user-friendly reward-providing apparatus of claim 3, wherein the moment information comprises one or more of the application category, the moment emotion information indicating an emotion when the moment event occurs, the application tag, the event message, and an event message targeted time, which is a time during which the event message is displayed.

5. The user-friendly reward-providing apparatus of claim 4, wherein the reward information comprises one or more of a targeted gender and age, which is information about a target to which the reward product is provided, the reward message, a reward message targeted time, which is a time during which the reward message is displayed, and targeted emotion information, which is information about a moment emotion when the reward message is displayed.

6. The user-friendly reward-providing apparatus of claim 5, wherein the event message determination unit is configured to:
determine any one of event messages for which the event message targeted time is set and which correspond to the moment identifier and the event occurrence time, among multiple event messages included in the moment information, to be an actual event message, and
if there is no event message corresponding to the event occurrence time, randomly determine any one of event messages for which the event message targeted time is not limited and which correspond to the moment identifier to be an actual event message.

7. The user-friendly reward-providing apparatus of claim 5, wherein the reward product determination unit is configured to:
select one or more reward products corresponding to the application category, the moment emotion information, and the application tag from among multiple reward products included in the reward information, as a reward product candidate group,
allow only reward products corresponding to one or more of the user gender and age, among reward products in the reward product candidate group, to remain by filtering the reward products in the reward product candidate group,
if there is no reward product corresponding to one or more of the user gender and age, among the reward products in the reward product candidate group, allow only reward products for which the targeted gender and age are not limited, among the reward products in the reward product candidate group, to remain by filtering the reward products in the reward product candidate group, and
randomly determine any one of the reward products remaining in the reward product candidate group to be an actual reward product.

8. The user-friendly reward-providing apparatus of claim 5, wherein the reward message determination unit is configured to:
determine any one of reward messages for which the reward message targeted time is set and which correspond to the event occurrence time and the moment emotion information, among multiple reward messages included in the reward information, to be an actual reward message, and
if there is no reward message corresponding to the event occurrence time, randomly determine any one of reward messages for which the reward message targeted time is not limited and which correspond to the moment emotion information, among the reward messages, to be an actual reward message.

9. The user-friendly reward-providing apparatus of claim 5, wherein the reward provision unit is configured to:
display the event message and a reward product button as a first screen to the user, and
when the user clicks the reward product button, change the event message to the reward message as a second screen, display the reward product at a location of the reward product button, and display a 'get gift' button.

10. A user-friendly reward-providing method, comprising:
when a moment event occurs while a user is using an application, receiving moment event information transmitted from a moment Software Development Kit (SDK) applied to the application;
determining a reward corresponding to the moment event information; and
providing the user with the reward that includes an event message, a reward product, and a reward message corresponding to the reward product.

11. The user-friendly reward-providing method of claim 10, wherein determining the reward comprises:
determining an event message in consideration of one or more of a moment identifier and an event occurrence time, which are included in the moment event information;
determining a reward product in consideration of one or more of an application category, moment emotion information, an application tag, a user gender, and a user age, which are included in the moment event information; and
determining a reward message in consideration of one or more of the event occurrence time and the moment emotion information.

12. The user-friendly reward-providing method of claim 11, further comprising an information registration unit for acquiring moment information from an application developer and reward information from a reward provider and registering the acquired moment information and reward information.

13. The user-friendly reward-providing method of claim 12, wherein the moment information comprises one or more of the application category, the moment emotion information indicating an emotion when the moment event occurs, the application tag, the event message, and an event message targeted time, which is a time during which the event message is displayed.

14. The user-friendly reward-providing method of claim 13, wherein the reward information comprises one or more of a targeted gender and age, which is information about a target to which the reward product is provided, the reward message, a reward message targeted time, which is a time during which the reward message is displayed, and targeted emotion information, which is information about a moment emotion, when the reward message is displayed.

15. The user-friendly reward-providing method of claim 14, wherein determining the event message is configured to:
determine any one of event messages for which the event message targeted time is set and which correspond to the moment identifier and the event occurrence time, among multiple event messages included in the moment information, to be an actual event message, and
if there is no event message corresponding to the event occurrence time, randomly determine any one of event messages for which the event message targeted time is not limited and which correspond to the moment identifier, to be an actual event message.

16. The user-friendly reward-providing method of claim 14, wherein determining the reward product is configured to:
select one or more reward products corresponding to the application category, the moment emotion information, and the application tag from among multiple reward products included in the reward information as a reward product candidate group,
allow only reward products corresponding to one or more of the user gender and age, among reward products in the reward product candidate group, to remain by filtering the reward products in the reward product candidate group,
if there is no reward product corresponding to one or more of the user gender and age, among the reward products in the reward product candidate group, allow only reward products for which the targeted gender and age are not limited, among the reward products in the reward product candidate group, to remain by filtering the reward products in the reward product candidate group, and
randomly determine any one of the reward products remaining in the reward product candidate group to be an actual reward product.

17. The user-friendly reward-providing method of claim 14, wherein determining the reward message is configured to:
determine any one of reward messages for which the reward message targeted time is set and which correspond to the event occurrence time and the moment emotion information, among multiple reward messages included in the reward information, to be an actual reward message, and
if there is no reward message corresponding to the event occurrence time, randomly determine any one of reward messages for which the reward message targeted time is not limited and which correspond to the moment emotion information, among the reward messages, to be an actual reward message.

18. The user-friendly reward-providing method of claim 14, wherein providing the reward is configured to:
display the event message and a reward product button as a first screen to the user, and
when the user clicks the reward product button, change the event message to the reward message as a second screen, display the reward product at a location of the reward product button, and display a 'get gift' button.

19. A computer program stored in a medium to execute the method of any one of claims 10 to 18.
